# EUROPEAN PATENT SPECIFICATION

(11) **EP 1 711 064 B1**
(45) Date of publication and mention of the grant of the patent: **11.04.2012**
(21) Application number: 05707851.1
(22) Date of filing: 26.01.2005
(51) Int. Cl.: A21D 15/08, A23L 3/3463

(54) **BAKED PRODUCT TREATED WITH NATAMYCIN AND PROCESS THEREOF**
MIT NATAMYCIN BEHANDELTE BÄCKEREIPRODUKTE UND VERFAHREN DAFÜR
PRODUIT CUIT AU FOUR TRAITE AVEC DE LA NATAMYCINE ET PROCEDE DE FABRICATION

(30) Priority: 28.01.2004 US 765210
(43) Date of publication of application: 18.10.2006
(73) Proprietor: DANISCO A/S, 1001 Copenhagen (DK)
(72) Inventor: WILLIAMS, Graham, Halstock Dorset BA22 9SB (GB); DELVES-BROUGHTON, Joss, Sherborne Dorset DT9 5PJ (GB); FARAGHER, John, Richfield, Wisconsin 53076 (US); SALMELA, Diane, Whitefish Bay, Wisconsin 53217 (US); HARDY, Jay, Eagle, ID 83616 (US); HAUGAN, Kersti, DK-7100 Vejle (DK); THOMAS, Linda, Dorchester Dorset DT1 2EP (GB); WISLER, Peter, Kuala Lumpur, 50480 (MY)
(74) Representative: Hjelt, Pia Dorrit Helene
(86) International application number: PCT/EP2005/050330
(87) International publication number: WO 2005/074690

(56) References cited:
- US-A- 3 753 734
- US-A- 3 996 386
- US-A1- 2004 013 781
- JOHNSON AND PETERS: "Encyclopaedia of Food echnology - Volume 2 - "Antibiotics in Food: Pimaricin"" 1974, THE AVI PUBLISHING CO.INC. , WESTPORT, CONNECTICUT, USA , XP008045955 cited in the application page 36, right-hand column, paragraph 5

## Description

### Background of the invention

The present invention relates to a non yeast-leavened fine bakery product with increased shelf life and to a process for increasing the shelf life of intermediate and high moisture fine bakery products.

Many industrially produced baked goods emerge from the baking process with a surface that is essentially sterile but post bake handling can quickly lead to fungal surface contamination as a result of exposure to airborne contaminants as well as equipment contact. Following surface contamination, many baked goods are then very vulnerable to surface mould spoilage, the severity of which is linked to factors such as the degree of contamination, the moisture content of the product and the storage conditions. Baked products with a relatively neutral pH, high moisture content and high water activity such as cakes, muffins, waffles, and tortillas are particularly prone to rapid spoilage from a variety of moulds, principally *Penicillium* and *Aspergillus* species. Manufacturing good tasting, high moisture products with a long mould free shelf life presents a constant and ongoing technical challenge to the baking industry.

Various methods have been adopted in an attempt to achieve the required shelf life. These include addition of humectants to reduce the water activity, addition of chemical mould inhibiting preservatives such as propionates or sorbates, limiting the availability of oxygen via modified atmosphere packaging and active packaging containing oxygen scavengers or providing a saturated ethanol headspace in the pack using sachet or strip inserts containing ethanol. The chemical preservatives such as sorbate and propionate are most effective at low pH so acids are often added in combination with these preservatives to reduce the pH of the baked product and hence improve the effectiveness of the added preservative.

Addition of acids, chemical preservatives and humectants can affect the taste and quality of the product and their use is often a compromise between achieving the best tasting product and the longest possible shelf life. Preservation based on packaging systems rely very much on pack integrity and even the best systems can suffer shelf life failures due to pack damage or seal failures and hence loss of pack integrity. Thus, there remains the technical problem of providing an efficient preservation system, which will not adversely affect the taste of baked goods.

Natamycin is a polyene macrolide natural anti-fungal agent produced by fermentation of the bacterium *Streptomyces natalensis.* Natamycin (previously known as pimaricin) has an extremely effective and selective mode of action against a very broad spectrum of common food spoilage yeasts and moulds with most strains being inhibited by concentrations of 1-15 ppm of natamycin.

Natamycin has been used for many years in a large number of countries throughout the world as an authorized preservation treatment for cheeses and certain meat products such as dried sausages. Despite this long-term use, the development of resistant strains has not been reported to date unlike the chemical organic acid sorbate and propionate preservatives for which a number of resistant yeasts and moulds have been detected and reported. Some species of *Penicillium* mould are even able to degrade and metabolise sorbate.

Natamycin is much less soluble in water than the chemical organic acid preservatives with its maximum solubility being around 40 ppm. In practice this means that when applied to the surface of the cheese or sausage, natamycin shows very limited diffusion and tends to stay on the surface of the food. Natamycin is active over a wide pH range and unlike the organic acid preservatives it is not dependant on a low pH acidic environment to show good anti-fungal activity. The effectiveness of natamycin at very low application levels on cheese and sausage has not been reported to have any adverse quality or flavour impact on the products.

Although natamycin has been used for a long time on cheese and on sausages, there is very little reported on the use of natamycin for other types of food. According to a review article "Antibiotics in Food: Primarcin" in the Encyclopaedia of Food Technology Volume 2. 1974, The Avi Publishing Co. Inc. Westport, Connecticut, USA, pp 36-37, Eds. A.H. Johnson and M.S. Peters, natamycin (pimaricin) is permitted in several countries as a food additive and it is either added into the food (e.g. orange juice, wine) or the food is dipped, soaked or sprayed with aqueous natamycin (e.g. cheese, sausage, fruit).

US 2004/0013781 discloses a fully baked bread product which remains soft for an extended shelf life. The bread may be protected by a microbial inhibitor which may be natamycin. In the described embodiments the inhibitor is included in the dough at baking. However, there is also a suggestion that a potassium sorbate inhibitor may be sprayed in an aqueous solution on the bread after baking.

In the U.S. the direct addition of natamycin into tortilla dough before baking is allowed. Tortilla dough is leavened without yeast and therefore adding natamycin into the tortilla dough is possible. In yeast leavened doughs, natamycin cannot be used since the natamycin would kill the yeast. Because of this limitation of using natamycin in yeast leavened bakery, natamycin seems to have been tested on the surface of yeast leavened bread. Thus, the review in the above mentioned 1974 Encyclopaedia also mentions that "rye and white bread were well protected when their surfaces were sprayed with a solution of 100 -500 ppm pimaricin". No specific results are quoted to support the "well protected" comment and no reference is quoted for this work. No target levels for natamycin / pimaricin on the surface of the bread are given, no method of spraying and no shelf life targets are mentioned. In a later update of this review article for the same Encyclopaedia there was no mention of this bakery work. The review also makes similar vague references to treating the surface of uncooked doughs and to direct addition at 25 - 50 ppm in fillings for cakes and pies.

The direct addition of natamycin into icings and fillings of cakes is described also by J. Tichá in Mlynsko-pekarensky promysl, 7/1975, pp 225-228, as being effective in preventing the growth of moulds and yeasts for about 14 days. The article concludes that natamycin in admixture with lactose is useful to preserve curd fillings, icings and butter creams.

The use of natamycin to protect the surface of the fillings of Cantonese mooncakes and pastry is allowed according to Chinese legislation. However, the mooncakes themselves often have a fairly low water activity and are thus not as prone to spoil as the fillings, which are often made of easily perishable foodstuffs.

Many fine bakery products are required to have a very long shelf life. Intermediate and high moisture fine bakery products such as muffins, tortillas, waffles, pancakes, pizzas, pastry, sponge cakes and the like are usually packaged and kept at ambient temperatures on the shelf for 2 to 10 weeks and sometimes longer. In contrast to this, yeast-leavened baked goods, such as bread, tend to go stale in a much shorter period and the shelf life of most bread is normally not above two weeks.

The high water content of many fine bakery products makes them very sensitive to spoilage due to mould and yeast growth. This is especially true when the water activity of the product a_{w} is 0.8 or more, especially 0.85 or more. In an attempt to protect intermediate moisture and high moisture baked goods from mould growth, the present inventors added natamycin to tortilla dough, as allowed by the U.S. regulations, and to the pastry dough and egg glaze of Chinese mooncakes pre-baking. However, surprisingly, the attempts failed and did not result in any significant improvement of the shelf life of the baked goods. It was found that incorporating natamycin within the baked good was unsuccessful despite the fact that natamycin levels, which would normally be considered effective against yeasts and moulds, could still be detected in the goods after the baking process.

In two separate trials where natamycin (as Natamax) was incorporated into tortillas, the control of surface mould growth during shelf life was not achieved. Analysis of the mouldy tortillas from both trials showed that natamycin was still present within the tortillas at levels between 14.0 and 28.0 ppm. These relatively high levels of residual natamycin would normally be expected to show good control of mould growth indicating that the natamycin present within these tortillas was not biologically available at the surface of the product where it is required to be effective.

Consequently, natamycin could not be used in the non yeast-leavened baked products in the way the person skilled would normally and preferably have applied it, i.e. by direct addition of natamycin to the ingredients prior to baking. There thus remained the problem of how to increase the shelf life of fine bakery products having a high water activity and tendency to mould growth whilst optimising on desirable product characteristics such as pH and taste.

Documents cited in this text ("herein cited documents"), as well as each document or reference cited in each of the herein-cited documents, and all regulations, manufacturer's literature, specifications, instructions, product data sheets, material data sheet, and the like, as to each product mentioned in this text, are hereby expressly incorporated herein by reference.

### Brief summary of the invention

The present invention is based on the realization that natamycin can still help to overcome preservation problems of intermediate and high moisture fine bakery goods provided that it is applied to the surface of the baked products after baking. The relatively high moisture content in the baked products ascertains that an effective amount of dissolved natamycin will continuously be present to combat yeast and mould growth on the surface of the baked products.

Thus, the present invention provides an intermediate or high moisture non yeast-leavened baked product having a water activity a_{w} >0.8, the surface of said bakery product having deposited thereon an effective amount of natamycin which is sufficient to keep said product mould free when packaged for a storage time of 2 weeks or more at ambient temperature, wherein said effective amount of natamycin comprises from 1 to 10 µg per cm² of the surface of said baked product.

The present invention also provides a process for increasing the shelf life of fine bakery products, comprising providing a baked fine bakery product having a water activity a_{w} >0.8; spraying the outer surface of said baked product with natamycin to deposit an effective amount of natamycin thereon; packaging said sprayed baked product into a protective envelope; and storing said packaged product at ambient temperature. The natamycin deposited on the surface of said bakery product is provided in an amount which is effective in keeping said product mould free even when stored for 3 weeks or more, wherein said effective amount of natamycin comprises from 1 to 10 µg per cm² of the surface of said baked product.

The fine bakery product of the invention is a non yeast-leavened fine bakery product having a water activity a_{w} >0.8, preferably between 0.8 and 0.95, preferably between 0.80 and 0.90, most preferably between 0.85 and 0.90. The preferred long shelf life fine bakery products protected by the invention are selected from muffins, waffles, tortillas, pizzas, pizza bases, pancakes, pastry, sponge cakes and the like baked fine bakery products. The term fine bakery should be considered as including also part-baked products of fine bakery.

The increase of mould-free shelf life achieved by the present invention is of immense significance to the baking industry and will allow the replacement of chemical preservatives such as propionate, benzoate and sorbate with natamycin, a less toxic, tasteless and naturally occurring alternative. The belief that natamycin is not an effective preservative for baked goods (based on evidence of lack of efficacy when incorporated into the food prior to baking), has been shown to be false and has been overcome by the present invention by spraying the natamycin onto products post baking. Even though this requires prospective users to invest in suitable spraying equipment that can deliver an even natamycin application to all surfaces of bakery products, the advantages of natamycin are seen to outweigh the disadvantages of its use.

Without wishing to be bound by any theory, it is believed that the lack of natamycin efficacy noted when the natamycin was included directly into the ingredients of the fine bakery products was caused by a combination of 1) heat degradation of surface natamycin and 2) formation of a surface crust during baking that prevented the natamycin within the baked good from reaching the surface.

### Detailed description of the invention

The lack of effectiveness that was seen when natamycin was incorporated into non yeast-leavened high water activity bakery products prior to baking led to the idea for the novel alternative solution of applying natamycin as a water based suspension precisely sprayed direct onto the exposed surfaces of the high water activity fine bakery product after the baking process. This novel approach targets a sufficient concentration of available natamycin directly at the surface of the baked product where the fungal contamination occurs. Any problem of losses during the baking process and availability on the surface has been overcome.

Consequently, the invention provides a fine bakery product the shelf life of which has been increased by the use of natamycin on the surface thereof. The fine bakery products are non yeast-leavened products intended for a long shelf life and having a moisture content which makes them susceptible to surface spoilage by moulds and yeasts. Such fine bakery products are intermediate or high moisture baked products having a water activity a_{w} >0.8, preferably 0.85 or more. A moisture content of 0.8 to 0.85 is regarded herein as an intermediate moisture content, while a moisture content above 0.85 is regarded as a high moisture content. Typical examples of such fine bakery products are cakes, muffins, waffles, tortillas, pizzas, pancakes, pastry, sponge cakes and similar high water activity baked products as well as similar part-baked fine bakery products. Pizzas are for example ready made pizzas or pizza bases.

The surface of the fine bakery product of the invention has deposited thereon an effective amount of natamycin which is sufficient to keep the product free of mould and yeast growth even though the product is packaged and stored for a time of 2 weeks or more. The effective amount of natamycin on the surface of the finished product is between 1 - 10 µg per cm² and it is sufficient for keeping the baked product mould free for 3 to 10 weeks, preferably for 6 to 10 weeks, or even longer, when the product is stored at ambient temperature, which usually ranges between 15 and 30°C and which more often is from 18 to 25°C.

When the process of the present invention is operated, the outer surface of a baked fine bakery product having a water activity a_{w} >0.8 is sprayed with natamycin. The spraying should be performed so that a preservatively effective amount of natamycin is deposited on the exposed surface of the product. Typically, the natamycin is sprayed onto the exposed surface in the form of an aqueous suspension containing natamycin as dissolved natamycin and also in solid, crystalline, non-dissolved form. Crystalline natamycin is sparingly soluble in water and the finely divided solid natamycin crystals will be deposited on the surface together with the water and the dissolved natamycin. A preferred aqueous natamycin suspension for spraying purposes contains natamycin in a concentration of 250 to 7000 mg, more preferably 1000 to 4000 mg natamycin per litre of water.

In a preferred embodiment of the invention the natamycin is deposited on said surface in a suspension which includes a thickener. The thickener is preferably selected from the group consisting of agar, alginates, carrageenan, cellulose and derivatives, gums, gelatin, pectins and derivatives thereof, polyvinyl acetate, starches and modified starches, and suspending agents. Useful derivatives of cellulose are such as microcrystalline cellulose sodium, hydroxypropylmethyl cellulose, carboxymethyl cellulose and methyl cellulose. The gums used are e.g. xanthan gum, gellan gum, locust bean gum, gum arabic, gum tragacanth, gum karaya, guar gum, rhamxam gum, conjac gum and seed gum. Suspending agents used are e.g. sodium dodecyl sulphate, polyethylene glycol, fumed silica, glycol and glycerol.

The thickener in the suspension ensures that the sprayed natamycin remains evenly distributed at the point of deposition and does not collect in pools in the crevices of the baked goods.

A very small amount of natamycin is required to provide the desired protection against spoilage by moulds and yeasts. A deposited amount of from 1 to 10 µg natamycin per cm² of the surface of the baked product has been found to comprise an effective amount.

The natamycin should be sprayed homogeneously on all outer surfaces of the baked product so as to protect the product all over. Natamycin has a very low tendency for migration in the product and will not spread far from the point of deposition. In order to provide a homogeneous deposition the spraying equipment should be carefully selected. The natamycin based spray suspension is preferably delivered by a spinning disc, pneumatically operated spray gun or any other suitable spraying system that is capable of delivering a small but consistent and accurate spray volume over a given surface area. The volume of the water based natamycin suspension sprayed onto the product should preferably be kept to the minimum level that will allow an even surface coverage.

The natamycin deposited on the surface of the bakery product should, however, be effective in keeping the fine bakery product mould free even when stored for 2 weeks or more.

After spraying, the baked product is packaged into a protective envelope, which is preferably made of a transparent material such as a plastic film or box to allow the presumptive buyer to view the product and be tempted by it. The films are generally of a moisture proof material to prevent the moist baked product from drying and loosing its softness during the several weeks of storing

The following examples illustrate the invention.

### Reference Example Natamycin in mooncakes

Mooncakes are traditional bakery products that are baked and eaten in large numbers once a year in China to celebrate a mid-Autumn festival. The cakes consist of a thin outer layer of pastry covering a variety of paste type fillings that are moulded into intricate shapes prior to baking. The outside of the cake is covered with an egg glaze and part cooked at 200°C -210°C for 15 minutes before a second coating of egg glaze is applied ready for the final bake of 10 minutes at the same temperature. Large-scale production, sale and storage of mooncakes begin in the period leading up to the festival and mould problems can occur on the surface of these products prior to consumption.

Two trial production runs of mooncakes containing lotus bean paste were made to test the efficacy of direct natamycin addition prior to baking for preserving these bakery products. The cakes were packed into individual clear plastic bags with no other preservative.

For the first production a range of four increasing natamycin levels (20, 25, 30 and 35 ppm) were mixed into the raw pastry dough for four small separate batches prior to glazing and baking. For the second production, nothing was added to the dough but an increasing range of the same four 20-35 ppm natamycin levels were added to the egg glaze that was applied to the cake surface after the first bake but before the second and final baking stage. Control cakes with no natamycin addition were also prepared.

Representative samples from each batch were assayed for residual natamycin in 10 g samples of the surface pastry layer. Good levels of residual natamycin activity were detected in the surface pastry of all samples from both production runs but despite this the growth of spoilage moulds still appeared on the surface of all of the natamycin treated cakes within 20 -24 days of manufacture.

### Example 1 Natamycin on the surface of fine bakery

Muffins are flour-based non yeast-leavened fine bakery goods prone to surface spoilage due to growth of moulds and yeasts. Their water activity a_{w} is typically about 0.85.

Muffins were prepared according to a standard recipe with no added preservative in the dough. Shortly after baking, individual muffins were sprayed whilst still warm with a choice of four different spray treatments:
1 - water only (control).
2 - water containing 8% added salt.
3 - water containing 4g per litre of Natamax^{™} lactose (containing 50% natamycin) obtainable from Danisco A/S.
4 - water containing 8g per litre of Natamax^{™} lactose.

Spraying was done using a pneumatic hand-held spray gun with integral reservoir. The reservoir was regularly shaken during spraying to ensure that the small, undissolved crystals of natamycin stayed in suspension. Each muffin was sprayed evenly over all surfaces with a minimum volume of finely adjusted spray.

After cooling, the sprayed muffins were packed into heat sealed clear polythene bags with 8 to 10 muffins per treatment per bag. Initial samples were selected and tested for water activity, pH and surface natamycin concentration. Unopened bags of muffins were put for shelf life evaluation at 25°C and examined daily for signs of surface mould or yeast growth.

The surface natamycin determination was performed as follows: The surface area of the muffins was calculated to be 150 cm². Individual muffins were shaved and the total surface material added to 100 ml high purity methanol and shaken for 1 hour. 50 ml of high purity water was added and the solution then filtered through a 0.2 µm membrane filter. The natamycin content was determined by HPLC analysis for the whole surface and then divided by 150 to give a result in µg of natamycin per cm² of muffin surface.

Results from analysis of the initial samples are shown in Table 1. As expected, the highest level of residual natamycin was detected on the muffins sprayed with the highest concentration of Natamax™ suspension (treatment 4).

**Table 1: Initial analysis results**

| Treatment | Residual natamycin µg/cm² | Water activity (Aw) | pH |
|---|---|---|---|
| 1) Water only | <1 | 0.839 | 9.39 |
| 2) 8% salt | <1 | 0.854 | 9.45 |
| 3) 4 g/l Natamax™ | 2.7 | 0.864 | 9.18 |
| 4) 8 g/l Natamax™ | 4.5 | 0.851 | 9.25 |

Results from the incubation study of the packs of muffins at 25°C are given in table 2. Packs of control muffins sprayed with water only or with the 8% salt in water were regarded as spoiled after only 5 and 11 days respectively due to the growth of clearly visible surface mould growth. In contrast to this, all of the packs of muffins sprayed with the two treatment levels of Natamax™ suspension were found to be completely free of any surface mould growth for a total incubation period of 70 days, after which time the incubation was stopped.

**Table 2: Results after incubation at 25°C**

| Treatment | Number of days in incubation at 25°C | Spoilage due to mould growth |
|---|---|---|
| 1) Water only | 5 days | All spoilt |
| 2) 8% salt | 11 days | All spoilt |
| 3) 4 g/l Natamax™ | 70 days | None spoilt |
| 4) 8 g/l Natamax™ | 70 days | None spoilt |

At the end of the 70 day incubation period, triplicate samples of the unspoiled muffins from Natamax™ spray treatments 3 and 4 were assayed for surface natamycin levels, water activity (Aw) and pH. The results from these final analyses are given in Table 3. Residual natamycin was still detectable at similar levels to those of the initial sample for the higher concentration spray treatment 4 and at reduced levels for the lower concentration spray treatment 3.

**Table 3: Final analysis results**

| Treatment | Residual natamycin µg/cm² | Aw (muffin outside) | pH (muffin outside) | Aw (muffin inside) | pH (muffin inside) |
|---|---|---|---|---|---|
| 3) 4 g/l Natamax™ | 0.7 | 0.85 | 6.97 | 0.85 | 8.15 |
| | 0.7 | NT | NT | NT | NT |
| | 0.7 | NT | NT | NT | NT |
| 4) 8 g/l Natamax™ | 4.2 | 0.83 | 6.21 | 0.84 | 7.91 |
| | 3.6 | NT | NT | NT | NT |
| | 4.8 | NT | NT | NT | NT |

| | | | | | |
|---|---|---|---|---|---|
| NT = Not tested | | | | | |

The above results clearly demonstrate the excellent preservative efficacy of natamycin, when sprayed onto the surface of this relatively high moisture flour based baked product, in preventing or delaying spoilage due to surface growth of yeast and moulds

### Example 2 Natamycin on the surface of fine bakery

Muffins were prepared according to the same standard recipe as in Example 1. Individual muffins were subjected to one of three treatments with a minimum of 50 muffins per treatment
1 - No spray (control)
2 - Water only spray (control)
3 - Water containing 4.2 g per litre of Natamax™ SF (sugar free containing 87% natamycin) obtainable from Danisco A/S.

The muffins were sprayed shortly after baking whilst still warm. Spraying was done with a pneumatic hand-held spray gun with integral reservoir. The reservoir was regularly shaken during spraying to ensure that the small, undissolved crystals of natamycin stayed in suspension. The approximate minimum volume of spray required to evenly cover the whole surface of a muffin was measured and a concentration of 4.2 g per litre of Natamax™ SF calculated to target a spray delivery of 5 µg of natamycin per cm² of muffin in treatment 3. Each muffin was sprayed evenly over all surfaces.

After cooling, the sprayed muffins were packed into individual, heat sealed, clear plastic bags. One sample was selected from each of the two control treatments and five samples from the Natamax™ SF spray treatment and tested for water activity, pH, yeast and mould count at 25°C and residual surface natamycin levels by HPLC analysis. Forty unopened muffins per treatment were put for shelf life evaluation at 25°C and examined daily for signs of surface mould or yeast growth.

Results from analysis of the initial samples are shown in Table 4. The residual natamycin levels detected on the muffins sprayed with the Natamax™ SF suspension were found to be close to the target level of 5 µg per cm².

**Table 4: Initial analysis results**

| Treatment | Residual natamycin µg/cm² | Water activity (muffin outside) | Water activity (muffin inside) | Mould at 25°C/g | pH |
|---|---|---|---|---|---|
| 1) No spray (control) | < 0.2 | 0.855 | 0.867 | < 50 | 8.55 |
| 2) Water only (control) | < 0.2 | 0.863 | 0.877 | < 50 | 8.65 |
| 3) 4.2 g/l Natamax™ SF | 5.1 | 0.863 | 0.879 | < 50 | 8.27 |
| | 4.3 | NT | NT | < 50 | NT |
| | 3.4 | NT | NT | < 50 | NT |
| | 3.8 | NT | NT | < 50 | NT |
| | 5.8 | NT | NT | < 50 | NT |

| | | | | | |
|---|---|---|---|---|---|
| NT = Not Tested | | | | | |

Results from the incubation study of the 40 muffins per treatment are given in Table 5. The first non-spray control sample (treatment 1) developed surface mould growth after only 7 days giving a mould free shelf life of only 6 days. The first water sprayed control sample (treatment 2) developed surface mould growth after only 10 days. In contrast to this, all of the 40 muffins sprayed with Natamax™ SF suspension remained completely free of any surface mould growth for a total incubation period of 68 days, after which time the incubation was stopped. Thus, in this trial experiment, a natamycin surface spray treatment of approximately 5 µg/cm² increased the mould-free shelf life of muffins at 25 °C from 6 days to at least 68 days.

**Table 5: Results after incubation at 25°C**

| Days incubated at 25°C | Number showing mould growth I Number under incubation | | |
|---|---|---|---|
| | Treatment 1 No spray control | Treatment 2 Water only control | Treatment 3 4.2 g/l Natamax™ SF |
| 6 | 0/40 | 0/40 | 0/40 |
| 7 | 1/40 | 0/40 | 0/40 |
| 9 | 2/40 | 0/40 | 0/40 |
| 10 | 3/40 | 1/40 | 0/40 |
| 14 | 5/40 | 1/40 | 0/40 |
| 17 | 6/40 | 2/40 | 0/40 |
| 23 | 6/40 | 3/40 | 0/40 |
| 24 | 7/40 | 4/40 | 0/40 |
| 63 | 8/40 | 4/40 | 0/40 |
| 68 | 8/40 | 4/40 | 0/40 |

### Example 3 Natamycin suspension on the surface of muffins

Natamycin suspension as such, as well as natamycin suspension containing a thickener was tested on the surface of muffins. The natamycin suspension contained 2000 ppm natamycin or 2000 ppm natamycin and 0.25 % of thickener HPMC, respectively.

Muffins were prepared according to a standard recipe with no added preservative in the dough. Shortly after baking, one third of the muffins were sprayed whilst still warm with the natamycin suspension without a thickener and one third with the natamycin suspension including the thickener. Spraying was done using a pneumatic hand-held spray gun with integral reservoir. Each muffin was sprayed evenly over all surfaces with a minimum volume of finely adjusted spray.

After cooling, the sprayed muffins were packaged into heat sealed clear polythene bags. Unopened bags of muffins were put for shelf life evaluation at 25°C and examined daily for signs of surface mould or yeast growth.

Natamycin treated muffin samples as well as untreated control muffin samples (which had no natamycin sprayed on the surface) were stored at ambient temperature (25 °C). Natamycin treated samples showed no mould after 16 days of storage, whereas the control samples displayed mould growth very quickly - after 5 days, as can be seen on the mould observation Table 6 below.

**Table 6**

| Days until mould observed | Control/untreated muffin | Natamycin treated muffin | Natamycin + thickener treated muffin |
|---|---|---|---|
| 1 | 0 | 0 | 0 |
| 2 | 0 | 0 | 0 |
| 5 | 0 | 0 | 0 |
| 6 | 1 | 0 | 0 |
| 7 | 2 | 0 | 0 |
| 8 | 3 | 0 | 0 |
| 9 | 4 | 0 | 0 |
| 10 | 4 | 0 | 0 |
| 11 | 4 | 0 | 0 |
| 12 | 4 | 0 | 0 |
| 13 | 5 | 0 | 0 |
| 14 | 5 | 0 | 0 |
| 15 | 5 | 0 | 0 |
| 16 | 5 | 0 | 0 |

| | | | |
|---|---|---|---|
| Scale: 0 = no mould observed 5 = extensive mould spoilage | | | |

The Table shows quite clearly that the treatment with a natamycin suspension both with or without a thickener prevents mould growth on muffin.

The above examples clearly demonstrate the preservative efficacy of natamycin when sprayed on the outer surface of fine bakery products having a water activity above 0.8, which are susceptible to surface spoilage by moulds and yeasts during storage.

## Claims

1. A non-yeast leavened fine bakery product with increased shelf life comprising an intermediate or high moisture baked product having a water activity a_{w} >0.8, the surface of said bakery product having deposited thereon an effective amount of natamycin which is sufficient to keep said product mould free when packaged for a storage time of 2 weeks or more at ambient temperature, wherein said effective amount of natamycin comprises from 1 to 10 µg per cm² of the surface of said baked product.

2. The fine bakery product of claim 1, wherein said fine bakery product is selected from muffins, waffles, tortillas, sponge cakes, pizzas, pastry, pancakes, and the like baked or part-baked products.

3. The fine bakery product of claim 1, wherein the water activity a_{w} of said baked product is between 0.8 and 0.95.

4. The fine bakery product of claim 3, wherein the water activity a_{w} of said baked product is between 0.8 and 0.90.

5. The fine bakery product of claim 3, wherein the water activity a_{w} of said baked product is between 0.85 and 0.90.

6. The fine bakery product of claim 1, wherein said natamycin is deposited on said surface in a suspension which includes a thickener selected from the group consisting of agar, alginates, carrageenan, cellulose and derivatives, gums, gelatin, pectins and derivatives thereof, polyvinyl acetate, starches and modified starches, and suspending agents.

7. The fine bakery product of claim 1, wherein said natamycin is deposited on said surface in an amount from 1 to 10 µg per cm² to keep said baked product mould free for a storage time of 3 to 10 weeks.

8. The fine bakery product of claim 7, wherein said natamycin is deposited on said surface in an amount from 1 to 10 µg per cm² to keep said baked product mould free for a storage time of 6 to 10 weeks.

9. The fine bakery product of claim 1, wherein said ambient temperature comprises a temperature of 15 to 30 °C.

10. The fine bakery product of claim 9, wherein said ambient temperature is from 18 to 25 °C.

11. The fine bakery product of claim 1, wherein said product is packaged in a protective envelope.

12. The fine bakery product of claim 11, wherein said envelope is of a moisture proof and/or transparent material.

13. A process for increasing the shelf life of fine bakery products, comprising
- providing a baked fine bakery product having a water activity a_{w} >0.8;
- spraying the outer surface of said baked product with natamycin to deposit an effective amount of natamycin thereon;
- packaging said sprayed baked product into a protective envelope; and
- storing said packaged product at ambient temperature;
- the natamycin deposited on the surface of said bakery product being effective in keeping said product mould free even when stored for 3 weeks or more, wherein said effective amount of natamycin comprises from 1 to 10 µg per cm² of the surface of said baked product.

14. The process of claim 13, wherein said natamycin is sprayed onto said surface in the form of an aqueous suspension.

15. The process of claim 14, wherein said suspension includes a thickener selected from the group consisting of agar, alginates, carrageenan, cellulose and derivatives, gums, gelatin, pectins and derivatives thereof, polyvinyl acetate, starches and modified starches, and suspending agents.

16. The process of claim 14, wherein said suspension contains natamycin in a concentration of 250 to 7000 mg natamycin per litre of water.

17. The process of claim 16, wherein said suspension contains natamycin in a concentration of 1000 to 4000 mg natamycin per litre of water.

18. The process of claim 14, wherein said natamycin suspension contains dissolved natamycin and crystalline natamycin.

19. The process of claim 13, wherein said natamycin is sprayed homogeneously on all outer surfaces of said baked product.

## Patentansprüche

1. Nicht-Hefe getriebenes Feinbackwaren-Produkt mit erhöhter Haltbarkeit, umfassend ein mit mittlerer oder hoher Feuchtigkeit gebackenes Produkt, das eine Wasseraktivität a_{w} > 0,8 hat, wobei die Oberfläche des Backwaren-Produkts eine darauf abgeschiedene, wirksame Menge von Natamycin aufweist, die ausreicht, um das Produkt schimmelfrei zu halten, wenn es für eine Lagerzeit von 2 Wochen oder länger bei Umbegungstemperatur verpackt ist, wobei die wirksame Menge Natamycin von 1 bis 10 µg pro cm² der Oberfläche des gebackenen Produkts umfasst.

2. Feinbackwaren-Produkt gemäß Anspruch 1, wobei das Feinbackwaren-Produkt unter Muffins, Waffeln, Tortillas, Biskuitkuchen, Pizzen, Gebäck, Pfannkuchen und dergleichen gebackenen oder teilgebacknenen Produkten ausgewählt ist.

3. Feinbackwaren-Produkt gemäß Anspruch 1, wobei die Wasseraktivität a_{w} des gebackenen Produkts zwischen 0,8 und 0,95 liegt.

4. Feinbackwaren-Produkt gemäß Anspruch 3, wobei die Wasseraktivität a_{w} des gebackenen Produkts zwischen 0,8 und 0,90 liegt.

5. Feinbackwaren-Produkt gemäß Anspruch 3, wobei die Wasseraktivität a_{w} des gebackenen Produkts zwischen 0,85 und 0,90 liegt.

6. Feinbackwaren-Produkt gemäß Anspruch 1, wobei das Natamycin auf der Oberfläche in einer Suspension abgeschieden ist, die ein Verdickungsmittel ausgewählt unter Agar, Alginaten, Carrageen, Zellulose und deren Derivaten, Pflanzengummi, Gelatine, Pektinen und deren Derivaten, Polyvinylacetat, Stärken und modifizierten Stärken, und Suspendierungsmitteln umfasst.

7. Feinbackwaren-Produkt gemäß Anspruch 1, wobei das Natamycin auf der Oberfläche in einer Menge von 1 bis 10 µg pro cm² abgeschieden ist, um das gebackene Produkt für eine Lagerzeit von 3 bis 10 Wochen schimmelfrei zu halten.

8. Feinbackwaren-Produkt gemäß Anspruch 7, wobei das Natamycin auf der Oberfläche in einer Menge von 1 bis 10 µg pro cm² abgeschieden ist, um das gebackene Produkt für eine Lagerzeit von 6 bis 10 Wochen schimmelfrei zu halten.

9. Feinbackwaren-Produkt gemäß Anspruch 1, wobei die Umgebungstemperatur eine Temperatur von 15 bis 30 °C umfasst.

10. Feinbackwaren-Produkt gemäß Anspruch 9, wobei die Umgebungstemperatur von 18 bis 25 °C beträgt.

11. Feinbackwaren-Produkt gemäß Anspruch 1, wobei das Produkt in einer Schutzhülle verpackt ist.

12. Feinbackwaren-Produkt gemäß Anspruch 11, wobei die Hülle aus einem feuchtigkeitsundurchlässigem und/oder transparentem Material ist.

13. Verfahren zur Erhöhung der Haltbarkeit von Feinbackwaren-Produkten, umfassend
- Bereitstellen eines gebackenen Feinbackwaren-Produktes, das eine Wasseraktivität a_{w} > 0,8 hat;
- Besprühen der äußeren Oberfläche des gebackenen Produktes mit Natamycin, um eine wirksame Menge Natamycin darauf abzuscheiden;
- Verpacken des besprühten, gebackenen Produkts in einer Schutzhülle, und
- Lagern des verpackten Produktes bei Umgebungstemperatur;
- wobei das auf der Oberfläche des Backwaren-Produktes abgeschiedene Natamycin wirksam ist, das Produkt schimmelfrei zu halten, selbst wenn es für 3 Wochen oder mehr gelagert wird, und wobei die wirksame Menge Natamycin von 1 bis 10 µg pro cm² der Oberfläche des gebackenen Porduktes umfasst.

14. Verfahren gemäß Anspruch 13, wobei das Natamycin in Form einer wässrigen Suspension auf die Oberfläche gesprüht wird.

15. Verfahren gemäß Anspruch 14, wobei die Suspension ein Verdickungsmittel ausgewählt unter Agar, Alginaten, Carrageen, Zellulose und deren Derivaten, Pflanzengummi, Gelatine, Pektinen und deren Derivaten, Polyvinylacetat, Stärken und modifizierten Stärken, und Suspendierungsmitteln umfasst.

16. Verfahren gemäß Anspruch 14, wobei die Suspension Natamycin in einer Konzentration von 250 bis 7000 mg Natamycin pro Liter Wasser enthält.

17. Verfahren gemäß Anspruch 16, wobei die Suspension Natamycin in einer Konzentration von 1000 bis 4000 mg Natamycin pro Liter Wasser enthält.

18. Verfahren gemäß Anspruch 14, wobei die Natamycin-Suspension gelöstes Natamycin und kristallines Natamycin enthält.

19. Verfahren gemäß Anspruch 13, wobei das Natamycin gleichmäßig auf die gesamte äußere Oberfläche des Backwaren-Produktes gesprüht wird.

## Revendications

1. Produit de boulangerie fin levé sans levure, avec une durée de vie augmentée comprenant un produit cuit au four d'une humidité intermédiaire ou élevée ayant une activité d'eau a_{w} > 0,8, sur la surface dudit produit de boulangerie étant déposée une quantité efficace de natamycine qui est suffisante pour que ledit produit reste exempt de moisissures lorsqu'il est emballé pour un temps de stockage de 2 semaines ou plus à la température ambiante, où ladite quantité efficace de natamycine comprend de 1 à 10 µg pour cm² de la surface dudit produit cuit au four.

2. Produit de boulangerie fin selon la revendication 1, où ledit produit de boulangerie fin est sélectionné parmi des muffins, gaufres, tortillas, gâteaux éponges, pizzas, pâtisseries, crêpes et des produits cuits ou partiellement cuits analogues.

3. Produit de boulangerie fin selon la revendication 1, dans lequel l'activité d'eau a_{w} dudit produit cuit au four est entre 0,8 et 0,95.

4. Produit de boulangerie fin selon la revendication 3, dans lequel l'activité d'eau a_{w} dudit produit cuit au four est entre 0,8 et 0,90.

5. Produit de boulangerie fin selon la revendication 3, dans lequel l'activité d'eau aw dudit produit cuit est entre 0,85 et 0,90.

6. Produit de boulangerie fin selon la revendication 1, dans lequel ladite natamycine est déposée sur ladite surface en une suspension qui comprend un épaississant sélectionné dans le groupe consistant en agar-agar, alginates, carraghénine, cellulose et dérivés, gommes, gélatine, pectines et ses dérivés, polyvinyl acétate, amidons et amidons modifiés et des agents de suspension.

7. Produit de boulangerie fin selon la revendication 1, dans lequel ladite natamycine est déposée sur ladite surface en une quantité de 1 à 10µg par cm² pour que ledit produit cuit au four reste exempt de moisissures pour une durée de stockage de 3 à 10 semaines.

8. Produit de boulangerie fin selon la revendication 7, dans lequel ladite natamycine est déposée sur ladite surface en une quantité de 1 à 10 µg par cm² pour que ledit produit cuit au four reste exempt de moisissures pendant une durée de stockage de 6 à 10 semaines.

9. Produit de boulangerie fin selon la revendication 1, dans lequel ladite température ambiante comprend une température de 15 à 30°C.

10. Produit de boulangerie fin selon la revendication 9, dans lequel ladite température ambiante est de 18 à 25°C.

11. Produit de boulangerie fin selon la revendication 1, où ledit produit est emballé dans une enveloppe de protection.

12. Produit de boulangerie fin selon la revendication 11, où ladite enveloppe est en un matériau étanche à l'humidité et/ou transparent.

13. Procédé pour augmenter la durée de vie de produits de boulangerie fins, comprenant:
- réaliser un produit de boulangerie fin cuit au four ayant une activité d'eau a_{w} > 0,8;
- pulvériser sur la surface extérieure dudit produit cuit de la natamycine pour déposer une quantité efficace de natamycine sur celle-ci;
- emballer ledit produit ayant été pulvérisé, cuit au four dans une enveloppe de protection; et
- stocker ledit produit emballé à la température ambiante;
- la natamycine déposée sur la surface dudit produit de boulangerie étant efficace pour que ledit produit reste exempt de moissures même lorsqu'il est stocké pendant 3 semaines ou plus, où ladite quantité efficace de natamycine comprend de 1 à 10 µg par cm² de la surface dudit produit cuit.

14. Procédé selon la revendication 13, où ladite natamycine est pulvérisée sur ladite surface sous la forme d'une suspension aqueuse.

15. Procédé selon la revendication 14, où ladite suspension comprend un épaississant sélectionné dans le groupe consistant en agar-agar, alginates, carraghénine, cellulose et dérivés, gommes, gélatine, pectines et ses dérivés, polyvinyl acétate, amidons et amidons modifiés et des agents de suspension.

16. Procédé selon la revendication 14, dans lequel ladite suspension contient de la natamycine en une concentration de 250 à 7000 mg de natamycine par litre d'eau.

17. Procédé selon la revendication 16, où ladite suspension contient de la natamycine en une concentration de 1000 à 4000 mg de natamycine par litre d'eau.

18. Procédé selon la revendication 14, où ladite suspension de natamycine contient de la natamycine dissoute et de la natamycine cristalline.

19. Procédé selon la revendication 13, où ladite natamycine est pulvérisée d'une manière homogène sur toutes les surfaces extérieures dudit produit cuit au four.
